# EUROPÄISCHE PATENTSCHRIFT

(11) **EP 2 377 429 B1**
(45) Veröffentlichungstag und Bekanntmachung des Hinweises auf die Patenterteilung: **21.01.2015**
(21) Anmeldenummer: 11003178.8
(22) Anmeldetag: 15.04.2011
(51) Int. Cl.: F16M 11/20, F16M 13/02

(54) **Fernsehdurchreiche**
Television wall passage
Passage de télévision

(30) Priorität: 15.04.2010 DE 102010015241
(43) Veröffentlichungstag der Anmeldung: 19.10.2011
(73) Patentinhaber: Löhr, Horst, 56299 Ochtendung (DE)
(72) Erfinder: Löhr, Horst, 56299 Ochtendung (DE)
(74) Vertreter: Wickord, Wiro

(56) Entgegenhaltungen:
- EP-A2- 0 591 924
- EP-A2- 1 783 420
- DE-A1- 2 056 775
- US-A1- 2005 206 279

## Beschreibung

Die Erfindung betrifft einerseits eine Vorrichtung, die zum Verbringen eines TV-Gerätes durch eine Öffnung in einer Wohnraumwand von einer Seite dieser Wohnraumwand auf die andere Seite der Wohnraumwand geeignet ist. Andererseits betrifft die Erfindung sowohl ein Fahrzeug als auch ein Gebäude, welche eine Vorrichtung, die zum Verbringen eines TV-Gerätes durch eine Öffnung in einer Wohnraumwand von einer Seite der Wohnraumwand auf die andere Seite der Wohnraumwand geeignet ist, umfasst.

Durchreichen in Wohnraumwänden sind nach dem Stand der Technik weit verbreitet. Sie existieren in verschiedensten Ausführungsformen, die teilweise auch bereits im Wohnungsbau praktische Umsetzung finden. So sind beispielsweise sowohl aus dem privaten Wohnbereich als auch aus Gastronomiebetrieben Durchreichen bekannt, durch die Speisen von der Küche in den Speiseraum gereicht werden können oder benutztes Geschirr und Besteck aus dem Speiseraum zurück in die Küche übergeben werden können.

So ist beispielsweise aus der DE 1 509 671 A1 eine Durchreiche für die schnelle Weitergabe von z.B. Speisen oder benutztem Geschirr zwischen Küche und Speiseraum bekannt. Diese Durchreiche zeichnet sich dadurch aus, dass sie eine innerhalb der Wand befindliche nach oben öffnende Schiebetür umfasst. Dadurch wird zum Öffnen der Durchreiche weder im Speiseraum noch in der Küche Platz für Flügeltüren beansprucht.

Weitere Durchreichen sind beispielsweise aus dem medizinischen Bereich sowie aus biologischen oder biochemischen Laboratorien bekannt. In diesem Bereich dienen Durchreichen als Schleusen, durch die Materialien in einen kontaminierten oder auch steilen Bereich hinein und heraus gebracht werden können, ohne dass große Türen bzw. Schleusen geöffnet werden müssen, was wegen der Hygienebestimmungen jeweils mit einem größeren Aufwand für die benutzenden Personen verbunden wäre. Durch Durchreichen wird der Aufwand der Desinfektion deutlich reduziert, da jeweils nur das zu übergebende Material und nicht die transportierende Person desinfiziert werden muss. Eine derartige Schleuse ist beispielsweise aus DE 1 980 320 U bekannt. Die darin beschriebene Durchreiche dient dazu, vom Patienten benutzte Gegenstände wie beispielsweise Geschirr und Besteck in der als Schleuse ausgebildeten Durchreiche zu desinfizieren.

Weitere Durchreichen sind nach dem Stand der Technik aus dem Sicherheitssektor bekannt. So offenbaren die Druckschriften DE 3 633 521 A1 und DE 81 17 258 U1 jeweils schleusenartige Durchreichen für Sicherheitsbehälter. Die Schleusen sind beiderseits durch Türen verschließbar, deren Schließ- und Verriegelungsmechanismus jeweils besonders stark ausgeprägt ist. Dieser Mechanismus gewährleitet auch, dass die jeweils gegenüberliegende Türe zwangsweise verriegelt ist, falls eine der Türen geöffnet ist.

Ein weiteres Beispiel aus dem Stand der Technik ist aus EP 0591924 A2 bekannt.

Bei der Bevölkerung der westlichen Industrienationen wächst das Interesse an großformatigen TV-Geräten. Bei Nichtbenutzung haben diese jedoch den Nachteil, dass sie durch die große dunkle Fläche einen Wohnraum optisch stark beeinflussen. Desweiteren besteht oft der Wunsch, in verschiedenen Räumen oder auch außerhalb des Wohnraumes das TV-Gerät nutzen zu können. Wegen der relativ hohen Anschaffungskosten dieser TV-Geräte besteht der Bedarf ein einer Möglichkeit, ein TV-Gerät schnell und einfach von einem Wohnraum auf eine andere Seite der den Wohnraum begrenzenden Wand zu bringen. Dies hat den Vorteil, dass so das ungenutzte und evtl. störende TV-Gerät aus dem Sichtfeld in dem hauptsächlich genutzten Raum (z.B. Wohnzimmer) verschwindet und es andererseits bei Bedarf auch in einem anderen Raum (z.B. Küche oder Schlafzimmer) genutzt werden kann.

Um das Verbringen eines TV-Gerätes möglichst einfach zu gestalten, ist es Aufgabe der Erfindung, eine Vorrichtung zum Verbringen eines TV-Gerätes durch eine Öffnung in einer Wohnraumwand von einer Seite dieser Wohnraumwand auf die andere Seite der Wohnraumwand bereit zu stellen, wobei das TV-Gerät möglichst schnell wieder nutzbar sein sollte, also das Ab- und Anschließen von Kabeln vermieden werden sollte. Außerdem ist es Aufgabe der Erfindung, ein Gebäude und/oder ein Fahrzeug bereit zu stellen, das eine solche Vorrichtung aufweist.

Der Gegenstand der vorliegenden Erfindung stellt eine Vorrichtung bereit, die diese Aufgabe entsprechend den Merkmalen der unabhängigen Ansprüche 1, 10 und 11 löst. Die erfindungsgemäße Vorrichtung ist zum Verbringen eines TV-Gerätes durch eine Öffnung in einer Wohnraumwand von einer Seite dieser Wohnraumwand auf die andere Seite der Wohnraumwand geeignet und zeichnet sich dadurch aus, dass die Vorrichtung in der Öffnung der Wohnraumwand angeordnet ist und mindestens einen Träger für ein TV-Gerät umfasst, wobei der Träger auf einer Führungseinrichtung angeordnet ist, welche einen mindestens teilweise in der Öffnung angeordneten, unbeweglich gegenüber der Wohnraumwand ausgebildeten Teil und mindestens einen gegenüber der Wohnraumwand beweglichen Teil aufweist und wobei mittels der Vorrichtung das TV-Gerät von einer Seite der Wohnraumwand entlang eines vorgegebenen Bewegungspfades durch die Öffnung hindurch auf die andere Seite der Wohnraumwand bewegbar ist.

Durch diese Ausführung ist es möglich, ein TV-Gerät schnell und unkompliziert von einer Seite einer Wohnraumwand auf die andere Seite der Wohnraumwand zu bringen. Da der Weg, den das TV-Gerät dabei zurücklegt, üblicherweise sehr kurz ist, können die bestehenden Anschlusskabel normalerweise beidseitig der Wohnraumwand genutzt werden, wodurch ein Umstecken unnötig wird.

In einer bevorzugten Ausführungsform umfasst die erfindungsgemäße Vorrichtung ein zumindest teilweise in der Öffnung der Wohnraumwand angeordnetes Gehäuse, in dem das TV-Gerät und/oder der Träger und/oder die Führungseinrichtung zumindest teilweise und/oder zeitweise angeordnet sind.

Ein solches Gehäuse ist bevorzugt derart gestaltet, dass es das TV-Gerät vollständig aufnehmen kann. Außerdem kann es beispielsweise mit Türen wenigstens einseitig und bevorzugt beidseitig geschlossen werden, so dass das TV-Gerät darin bei Nichtbenutzung geschützt ist. Dies ist besonders Vorteilhaft, wenn sich die Vorrichtung in einem Fahrzeug, beispielweise einem Wohnmobil oder einem Wohnwagen befindet. In dem Gehäuse ist das TV-Gerät weitgehend vor Beschädigungen geschützt, die beispielsweise durch unzureichend gesicherte, während der Fahrt verrutschende oder kippende Gegenstände verursacht werden können.

Ein derartiges Gehäuse kann derart gestaltet sein, dass es vollständig in der Wand integriert ist. Insbesondere bei mobilen Wohnobjekten sind die Wohnraumwände jedoch oft sehr dünn, so dass das Gehäuse mindestens auf einer Seite in den jeweiligen Raum hineinragt. In diesem Fall bietet es sich an, das Gehäuse derart zu gestalten, dass es beispielsweise in eine Schrankwand oder ähnliches integriert werden kann und bündig mit dieser abschließt, wodurch ein angenehmes und homogenes Gesamtbild erreicht wird. Dabei kann das Gehäuse in seiner Längenausdehnung sowohl senkrecht als auch parallel zu der Wohnraumwand angeordnet sein. Es ist auch möglich, das Gehäuse derart zu gestalten, dass es beweglich in der Öffnung der Wand angeordnet ist. Beispielsweise kann das Gehäuse drehbar oder schwenkbar sein.

Insofern wird nach einem weiteren Aspekt der Erfindung die vorliegende Aufgabe auch von einer Vorrichtung geeignet zum Verbringen eines TV-Gerätes durch eine Öffnung in einer Wohnraumwand von einer Seite der Wohnraumwand auf die andere Seite der Wohnraumwand gelöst, wobei die Vorrichtung in der Öffnung der Wohnraumwand angeordnet ist und mindestens einen Träger für ein TV-Gerät umfasst, wobei der Träger auf einer Führungseinrichtung angeordnet ist, welche einen mindestens teilweise in der Öffnung angeordneten unbeweglich gegenüber der Wohnraumwand ausgebildeten Teil und mindestens einen gegenüber der Wohnraumwand beweglichen Teil aufweist, wobei mittels der Vorrichtung das TV-Gerät von einer Seite der Wohnraumwand entlang eines vorgegebenen Bewegungspfades durch die Öffnung hindurch auf die andere Seite der Wohnraumwand bewegbar ist, und wobei die Vorrichtung ein Gehäuse aufweist, welches einen Aufnahmeraum aufweist, der über eine Außenfläche der Wohnraumwand hervor steht.

Somit lassen sich selbst TV-Geräte mit sehr großen Bildschirmflächen vorteilhafter Weise vollständig verschließen.

In einer weiteren bevorzugten Ausführungsform weist der Träger des TV-Gerätes ein schwenkbares Gelenk auf, welches mindestens eine Änderung eines zwischen einer Orthogonalen einer Bildschirmfläche des TV-Gerätes und einer Bewegungsrichtung entlang der Führungseinrichtung gebildeten Winkels ermöglich. Dadurch ist es möglich das TV-Gerät zu drehen und zu neigen, um in jedem der Räume ein möglichst guten Blick auf den Bildschirm gewährleisten zu können. Die Rotation um eine senkrechte Achse ermöglicht weiterhin, dass das TV-Gerät bei einer schmalen Öffnung in der Wohnraumwand so gedreht werden kann, dass es mit seiner Schmalseite voran durch die Öffnung verbracht werden kann. Dies ist beispielsweise bei einem senkrecht zu der Wohnraumwand angeordnetem Gehäuse notwendig. Durch die Möglichkeit, das auf dem Träger angeordnete TV-Gerät zusätzlich abschnittsweise um eine waagerechte Achse zu rotieren, also zu neigen oder steiler zu stellen, ist es möglich, auf unterschiedliche Distanzen und Sitzhöhen der TV-Zuschauer eingehen zu können und den Bildschirm möglichst angenehm für die Zuschauer auszurichten.

In einer besonders bevorzugten Ausführungsform ist das schwenkbare Gelenk als Schwenkfuß ausgebildet ist. Der Schwenkfuß kann dabei beispielsweise einen kugelgelagerten Drehfuß umfassen.

Des Weiteren umfasst in einer weiteren bevorzugten Ausführungsform der Vorrichtung die Führungseinrichtung mindestens eine Teleskopschiene. Diese kann derart gestaltet sein, dass sie zusammengeschoben und gemeinsam mit dem TV-Gerät vollständig in dem Gehäuse verstaut werden kann. Sie ist kann beidseitig des Zentrums ausfahrbar gestaltet sein, so dass das TV-Gerät vollständig von einer Seite der Wohnraumwand auf die andere Seite der Wohnraumwand befördert werden kann. Die Länge der ausgefahrenen Teleskopschiene ist bevorzugt so groß, dass das TV-Gerät auf jeder Seite der Wand vollständig um das schwenkbare Gelenk drehbar ist. Damit kann die Bildschirmfläche in jeden gewünschten Winkel zu Wand gebracht werden, um so von jeder Position einen guten Blick auf die Bildschirmoberfläche gewährleisten zu können.

In einer besonders bevorzugten Ausführungsform ist die Vorrichtung in einer Öffnung einer Wohnraumwand eines mobilen Wohnraums angeordnet. Besonders in mobilen Wohnräumen sind durch die während des Transportes entstehenden Erschütterungen TV-Geräte besonderen Belastungen ausgesetzt. Daher bietet es sich an, diese in einem Gehäuse zu verstauen. Aufgrund der üblicherweise engen Verhältnisse in beispielsweise Wohnmobilen oder Wohnwagen bietet sich die Nutzung eines TV-Gerätes an mehreren Positionen des Wohnraums an. So kann mittels der Vorrichtung ein einzelnes TV-Gerät beispielsweise zeitweise im Aufenthaltsraum des mobilen Wohnraums und zu anderen Zeiten in der Küche genutzt werden. Besonders interessant ist auch die Anordnung einer erfindungsgemäßen Vorrichtung in einer Außenwand eines Wohnraums. Hierbei befindet sich das TV-Gerät meistens im Inneren eines Gebäudes, beispielsweise in einem Wohnzimmer, und kann lediglich bei Bedarf durch eine hierfür in der Außenwand vorgesehene Öffnung in einen Außenbereich, beispielsweise einer Terrasse, vorteilhaft verbracht werden. Hierdurch ist es möglich, das TV-Gerät von seinem angestammten Aufstellungsort im Inneren des Gebäudes auf besondere Weise in den Außenbereich zu verbringen.

Eine Anordnung der erfindungsgemäßen Vorrichtung ist auch besonders hinsichtlich eines mobilen Wohnraums vorteilhaft. Dadurch ist es möglich, das TV-Gerät sicher im Inneren des Fahrzeugs, beispielsweise des Wohnmobils, zu transportieren und bei Bedarf und geeigneten Wetterbedingungen nach außen zu verbringen, um auch im Freien fernsehen zu können. Dies bietet sich besonders beim Camping an, wo besonders während der Mahlzeiten und geselliger Abende viel Zeit im Freien verbracht wird.

Insofern wird die vorliegende Aufgabe nach einem weiteren Aspekt der Erfindung auch von einer Vorrichtung geeignet zum Verbringen eines TV-Gerätes durch eine Öffnung in einer Wohnraumwand von einer Seite der Wohnraumwand auf die andere Seite der Wohnraumwand gelöst, wobei die Vorrichtung in der Öffnung der Wohnraumwand angeordnet ist und mindestens einen Träger für ein TV-Gerät umfasst, wobei der Träger auf einer Führungseinrichtung angeordnet ist, welche einen mindestens teilweise in der Öffnung angeordneten unbeweglich gegenüber der Wohnraumwand ausgebildeten Teil und mindestens einen gegenüber der Wohnraumwand beweglichen Teil aufweist, wobei mittels der Vorrichtung das TV-Gerät von einer Seite der Wohnraumwand entlang eines vorgegebenen Bewegungspfades durch die Öffnung hindurch auf die andere Seite der Wohnraumwand bewegbar ist, und wobei die Vorrichtung in einer Außenwand eines Gebäudes oder eines Fahrzeugs angeordnet ist, so dass die Vorrichtung dazu geeignet ist, das TV-Gerät von einer Innenseite des Gebäudes oder des Fahrzeugs durch die Öffnung hindurch nach außen zu verbringen.

Um in diesem Fall die verhältnismäßig wertvollen TV-Geräte vor Diebstahl schützen zu können, ist in einer bevorzugten Ausführungsform mindestens eine Seite der Öffnung in der Wohnraumwand verschließbar. Vorzugsweise ist die verschließbare Öffnung des Gehäuses auf der Seite der Vorrichtung angeordnet, die sich auf der Außenseite einer Außenwand des Wohnraums befindet. Durch diese verschließbare Ausführung ist das TV-Gerät zwar für befugte Personen von außen zugänglich, vor unbefugtem Zugriff jedoch geschützt. Es ist auch möglich, dass die beiden Seiten der Öffnung in der Wohnraumwand schließbar oder mittels eines oder mehreren Schlössern verschließbar sind.

Da Öffnungen in Wohnraumwänden potentiell Kanäle für Immissionen sind, ist die Öffnung in einer bevorzugten Ausführungsform mit mindestens einem Dämmstoff ausgekleidet, der den Übertritt von Immissionen von einer Seite der Wohnraumwand durch die Öffnung hindurch auf die andere Seite der Wohnraumwand erschwert. Die verwendeten Dämmstoffe können dafür so ausgewählt sein, um die unterschiedlichsten Immissionen von einem Übertritt von einer Seite der Wohnraumwand durch die Öffnung hindurch auf die andere Seite der Wohnraumwand reduzieren können. Beispielsweise können Wärmedämmelemente oder Schallschutzelemente verwendet werden. Aber auch Dämmstoffe zur Reduzierung des Übertrittes von elektromagnetischer, ionisierender oder sonstiger Strahlung, gesundheitsgefährdenden Stoffen, Gerüchen, Allergenen, oder ähnlichen sind möglich. Diese Dämmstoffe können gleichzeitig dazu dienen, das TV-Gerät im Inneren des Gehäuses zu schützen. Beispielsweise können Schalldämmstoffe derart ausgebildet sein, dass durch sie Beschädigungen des TV-Gerätes während der Bewegung eines mobilen Wohnraums im Straßenverkehr und den daraus resultierenden Erschütterungen vermieden werden.

Anschlüsse für benötigte Verbindungskabel sind bevorzugt im Gehäuseinneren angeordnet. Dadurch kann die Führung von Kabeln durch die Tür vermieden werden. Die Verbindungen der Kabel und der Anschlüsse erfolgt beispielsweise über die üblichen Steckverbindungen, wie Stecker und Steckdose. Dies vereinfacht einen eventuell nötigen Austausch des TV-Gerätes. Die Kabel werden mittels einer geeigneten Einrichtung zur Kabelführung geführt, die verhindert, dass die Kabel durchhängen und bei der Bewegung des TV-Gerätes entlang der Führungseinrichtung in den Bewegungspfad gelangen. Eine Möglichkeit der Aufrechterhaltung der gewünschten Kabelspannung erfolgt mittels eines Kabelführungsarms, welcher das Kabel mittels einer Rückstellfeder, unabhängig von der Position des TV-Gerätes, auf Spannung hält und damit eine unerwünschte Interaktion zwischen Anschlusskabel und Führungseinrichtung vermeidet. Es ist auch möglich, dass Versorgungsleitungen in die Führungseinrichtung integriert sind. Es ist beispielsweise denkbar, dass das Antennensignal durch die Führungseinrichtung übertragen wird.

Da eine derartige Vorrichtung je nach verwendetem TV-Gerät und verwendeter Dämmung recht voluminös ausgebildet sein kann, besteht die Möglichkeit, dass die Vorrichtung oder deren Gehäuse auf mindestens einer Seite der Wand in den Wohnraum hineinragt. Um diesen oft als störend empfundenen Anblick zu vermeiden, ist in einer bevorzugten Ausführungsform der Vorrichtung vorgesehen, dass das Gehäuse mindestens auf einer Seite der Wohnraumwand mit einer Sichtverkleidung versehen ist. Dies kann beispielsweise durch eine geeignete Abdeckung realisiert werden. Eine weitere Möglichkeit ist es, die Vorrichtung in eine Regalwand zu integrieren und sowohl die Dimensionen der Vorrichtung bzw. des Gehäuses als auch die Sichtverkleidung an die Optik und die Dimensionen der Regalwand anzupassen. Beispielsweise können die Fronten und Beschläge einer Regalwand und die Sichtverkleidung der Vorrichtung einheitlich gestaltet sein.

Ein weiter wesentlicher Aspekt der vorliegenden Erfindung ist ein Fahrzeug, das eine erfindungsgemäße Vorrichtung aufweist.

Ebenso ist ein Gebäude, welches eine erfindungsgemäße Vorrichtung aufweist, ein wesentlicher Aspekt der vorliegenden Erfindung.

Weitere Vorteile, Ziele und Eigenschaften vorliegender Erfindung werden anhand nachfolgender Beschreibung anliegender Zeichnung erläutert, in welcher beispielhaft eine erfindungsgemäße Vorrichtung zum Verbringen eines TV-Gerätes durch eine Öffnung in einer Wohnraumwand von einer Seite der Wohnraumwand auf die andere Seite der Wohnraumwand dargestellt ist.

Es zeigen:
- Fig. 1:: eine schematische Seitenansicht einer Vorrichtung mit TV-Gerät, die in einer Öffnung einer Wand angeordnet ist,
- Fig. 2:: eine weitere schematische Seitenansicht einer Vorrichtung wie in Fig. 1, die jedoch nur einseitig geöffnet ist,
- Fig. 3:: eine schematische Detaildarstellung eines schwenkbaren Gelenkes aus Fig. 1,
- Fig. 4:: eine schematische Aufsicht auf eine erfindungsgemäße Vorrichtung mit TV-Gerät,
- Fig. 5:: eine perspektivische Ansicht einer erfindungsgemäßen Vorrichtung mit TV-Gerät,
- Fig. 6:: eine schematische Detaildarstellung einer Teleskopschiene.

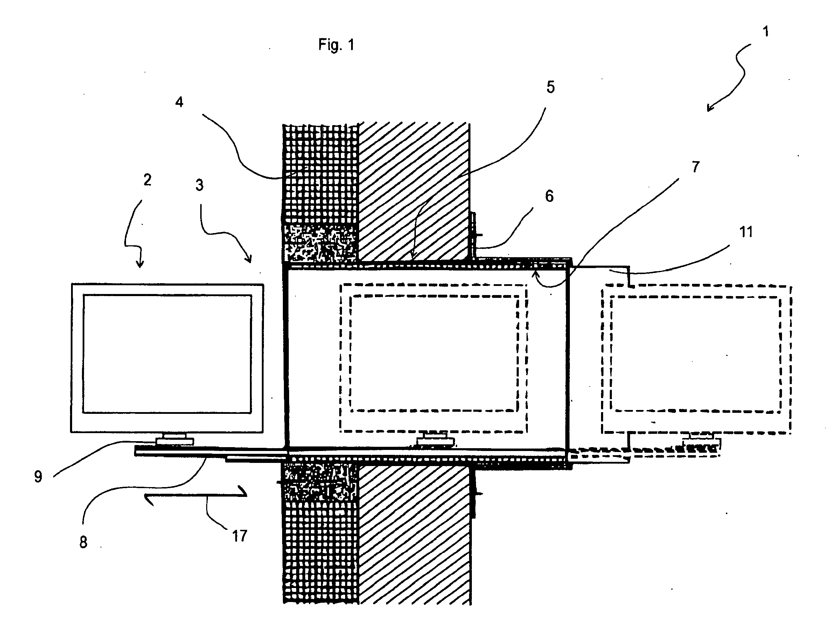

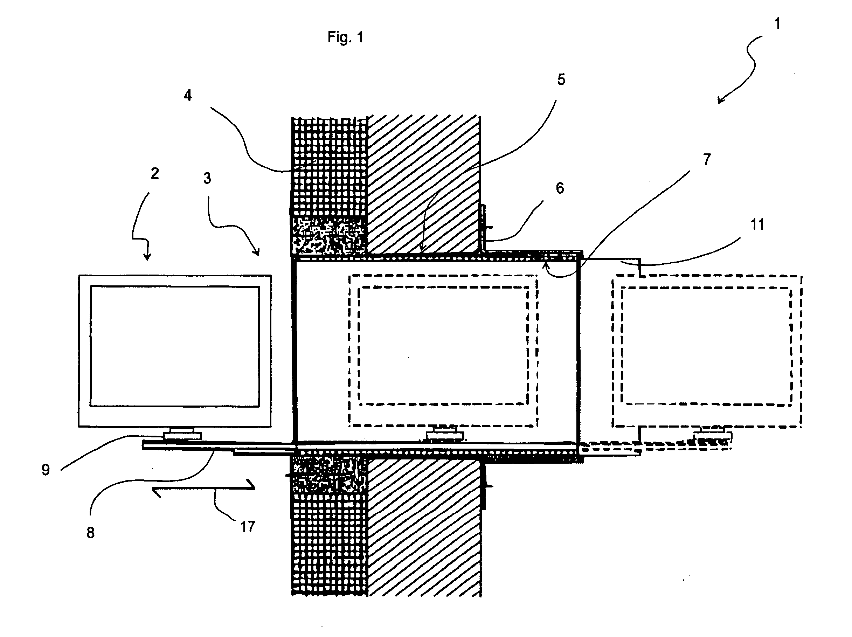

Fig. 1 zeigt eine schematische Seitenansicht einer Vorrichtung 1 mit TV-Gerät 2, die in einer Öffnung 3 einer Wand 4 angeordnet ist. In dem gezeigten Beispiel umfasst die Vorrichtung 1 ein mit Dämmstoff 7 ausgekleidetes Gehäuse 5 und eine Sichtverkleidung 6, die jenen Teil des Gehäuses 5 abdeckt, der nicht im Wanddurchbruch 3 angeordnet ist. Die Dimensionen des mit Dämmstoff 7 ausgekleideten Gehäuses 5 sind dabei so gewählt, dass mindestens das TV-Gerät 2, die Führungseinrichtung 8 und das schwenkbare Gelenk 9 durch dieses hindurchgeführt werden können. In dem gezeigten Beispiel kann das TV-Gerät 2 vollständig in dem Gehäuse 5 untergebracht werden. Beide Schmalseiten 10 der Vorrichtung 1 sind mit Türen versehen, die geöffnet werden können, um das TV-Gerät 2 herausziehen zu können. Das TV-Gerät 2 ist über ein schwenkbares Gelenk 9 mit einer Führungseinrichtung 8 verbunden, die in diesem Fall als Teleskopschiene 12 ausgebildet ist. Zur besseren Übersicht sind Anschlusskabel 13 und Steckdosen 14 zum Anschluss des TV-Gerätes 2 nicht gezeigt.

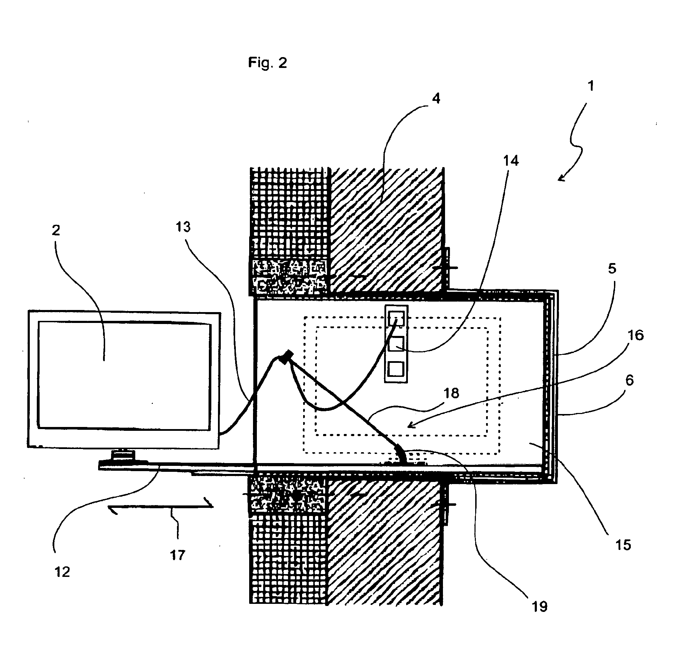

Fig. 2 zeigt eine weitere schematische Seitenansicht einer Vorrichtung 1 wie in Fig. 1, die jedoch nur einseitig geöffnet ist. Bei nur einer Öffnung oder einer geöffneten Seite kann die Vorrichtung 1 als Lagerraum für das TV-Gerät 2 bei Nichtbenutzung verwendet werden. Besonders im Fall der Verwendung der Vorrichtung 1 in mobilen Wohnräumen ist dies interessant, da somit das empfindliche TV-Gerät 2 während Fahrten und den dabei entstehenden Erschütterungen und auftretenden Beschleunigungskräften weitgehend vor Beschädigungen geschützt ist.

Zusätzlich sind die in Fig. 1 nicht gezeigten Steckdosen 14 für benötigte Verbindungskabel 13 dargestellt. Bevorzugt befinden sich diese im Gehäuseinneren, da so die Führung von Kabeln 13 durch die Tür 11 vermieden werden kann. Die Kabelverbindungen können zwar auch ohne Steckdosen 14 hergestellt werden, jedoch vereinfacht die Ausführung mit im Gehäuseinneren angeordneten Steckverbindungen 14 einen eventuell nötigen Austausch des TV-Gerätes 2 sehr. Eine Einrichtung zur Kabelführung 16 verhindert, dass das Kabel 13 durchhängt und bei der Bewegung des TV-Gerätes 2 entlang der Führungseinrichtung 8 in den Bewegungspfad 17 gelangt. Im gezeigten Beispiel ist die Kabelführung 16 als federnder Stab ausgebildet, der die Anschlusskabel mittels einer Rückstellfeder 19, unabhängig von der Position des TV-Gerätes 2, auf Spannung hält und damit eine unerwünschte Interaktion zwischen Anschlusskabel 13 und Führungseinrichtung 8 vermeidet.

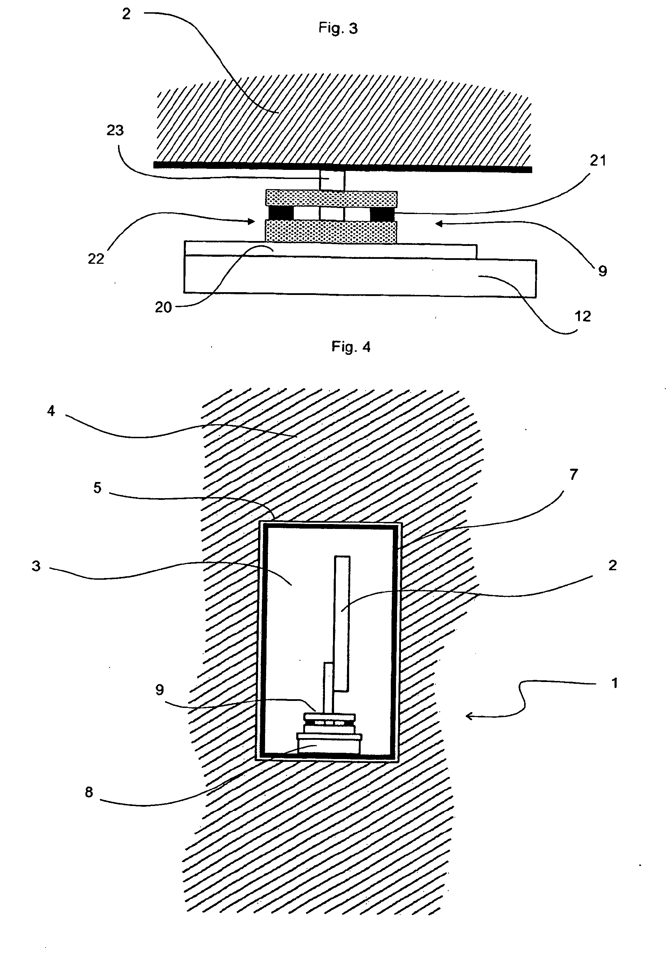

Fig. 3 zeigt eine schematische Detaildarstellung eines schwenkbaren Gelenkes 9 aus Fig. 1. Auf der als Teleskopschiene 12 ausgebildeten Führungseinrichtung ist ein Basiselement 20 angeordnet. Dieses Basiselement 20 kann auch mehrere parallel verlaufende Teleskopschienen 12 verbinden, wodurch zusätzliche Stabilität erreicht wird. Auf dem Basiselement 20 ist ein Drehfuß 22 mit Kugellager 21 angeordnet, dessen Oberseite ein Befestigungsteil 23 des TV-Gerätes 2 trägt. Dieses Befestigungsteil 23 ist derart gestaltet, dass eine Neigung des TV-Gerätes 2 möglich ist. Damit ist es möglich, die Position des TV-Gerätes 2 den jeweiligen Bedingungen in den unterschiedlichen Räumen anzupassen. Die Möglichkeit der Neigung des TV-Gerätes 2 ist notwendig, um es auf unterschiedliche Sitzhöhen einstellen zu können. Diese Sitzhöhenunterschiede sind besonders zwischen dem Inneren und dem Äußeren von mobilen Wohnräumen sehr ausgeprägt. Der bewegliche und der unbewegliche Teil der Führungseinrichtung 8 sind nicht im Detail dargestellt.

Fig. 4 zeigt eine schematische Aufsicht auf eine erfindungsgemäße Vorrichtung 1 mit TV-Gerät 2. Zur besseren Übersicht ist die geöffnete Tür 11 nicht gezeigt. Das Gehäuse 5 ist in der Öffnung 3 der Wand angeordnet und mit dieser fest verbunden. Im Inneren, und ebenfalls gegenüber der Wand 4 unbeweglich, sind Befestigungselemente der Führungseinrichtung 8 verankert. Die beweglichen Elemente der Führungseinrichtung 8 tragen das schwenkbare Gelenk 9, mit dem auch das TV-Gerät 2 fest verbunden ist. Wie deutlich zu erkennen ist, ist die Öffnung 3 in der Wand 4 und auch das Gehäuse 5 deutlich größer als das TV-Gerät 2 dimensioniert. Dies ermöglicht zum einen das Einbringen von Dämmmaterialien 7, die das in dem Gehäuse 5 befindliche TV-Gerät 2 bei Erschütterungen schützen und gewährt zum anderen auch Spielraum in Bezug auf die Größe bei der Neuanschaffung eines TV-Gerätes 2 im Falle eines irreparablen Defektes des Altgerätes. Kabel 13 und Anschlusseinrichtungen 14 sind der Übersichtlichkeit halber nicht gezeigt.

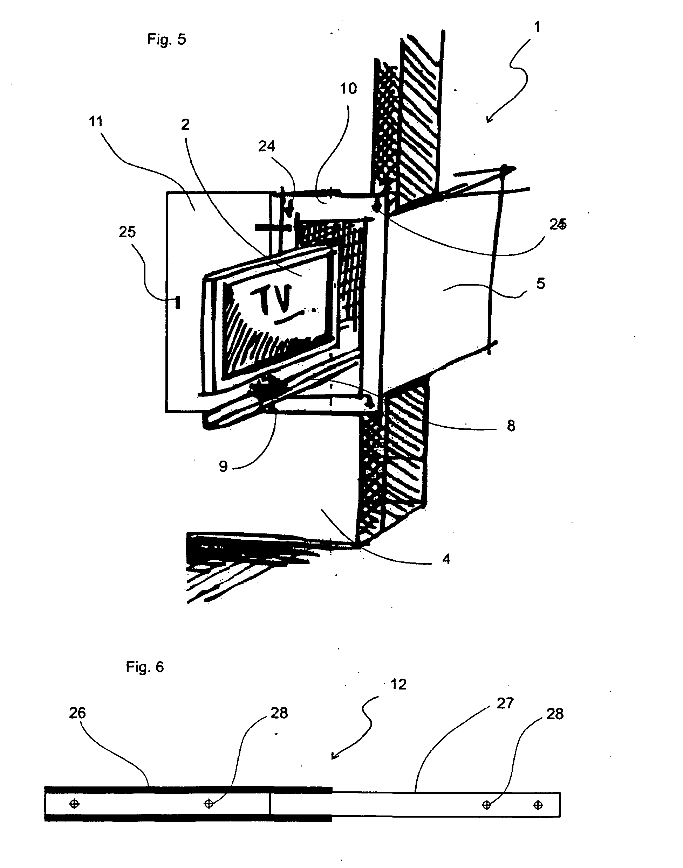

Fig. 5 zeigt eine perspektivische Ansicht einer erfindungsgemäßen Vorrichtung 1 mit TV-Gerät 2. Die Wand 4 ist hierbei im Schnitt dargestellt, um auch Teile der Vorrichtung 1 darstellen zu können, die sich auf der rückseitigen Seite der Wand 4 befinden. Gezeigt ist der

Wanddurchbruch 3, in dem sich das Gehäuse 5 der Vorrichtung 1 befindet. Dieses ist mit Befestigungselementen 24 mit der Wand verbunden. Der durch das Gehäuse gebildete Hohlraum kann durch eine Tür 11 geschlossen und abgedeckt werden. Hierfür sind alle üblichen Mechanismen wie beispielsweise ein- oder zweiflügelige Flügeltüren oder Schiebetüren möglich. Die Tür 11 ist durch einen Verschlussmechanismus 25 schließbar, je nach Anwendungsbereich auch verschließbar. Teilweise im Inneren des Gehäuses 5 ist die Führungseinrichtung 8 gezeigt, die das schwenkbare Gelenk 9 trägt, auf dem wiederum das TV-Gerät 2 angeordnet ist. Die als Teleskopschiene 12 ausgebildete Führungseinrichtung 8 tritt durch die mittels der Tür 11 schließbare Öffnung nach vorne aus dem Gehäuse 5 aus, so dass sich das TV-Gerät 2 ebenfalls auf der Vorderseite der Wand 4 befindet und auf dieser Seite der Wand 4 genutzt werden kann. Die Anschlusskabel 13 des TV-Gerätes 2 sind in dieser Abbildung nicht gezeigt.

Fig. 6 zeigt eine schematische Detaildarstellung einer Teleskopschiene 12, wie sie als Führungselement Verwendung findet. Je nach gewünschter Auszugslänge können auch mehrfach ausziehbare Teleskopschiene 12 verwendet werden. In der gezeigten schematischen Darstellung ist eine Teleskopschiene 12 mit einfachem Auszug gezeigt. Zu erkennen sind der fest mit dem Gehäuse bzw. der Wand verbundene Teil 26 der Teleskopschiene und der gegenüber dem Gehäuse bzw. der Wand bewegliche Teil 27, sowie Bohrungen 28 zur Befestigung der Teleskopschiene 12 am Gehäuse und an dem Basiselement 20, welches das TV-Gerät 2 trägt. Als Führungselement können alle geeigneten nach dem Stand der Technik bekannten Teleskopelemente verwendet werden, die den durch das TV-Gerät 2 und eventuellen Erschütterungen verursachten Belastungen standhalten. Um eine leichtere Bewegung und längere Lebensdauer zu gewährleisten, sind kugelgelagerte Teleskopschienen 12 bevorzugt. Je nach Ausführungsvariante können mehrere Teleskopelemente verwendet werden. Als eine mögliche und gut geeignete Ausführungsform hat sich die paarweise Verwendung von Teleskopschienen 12 erwiesen.

Neben dem gezeigten Beispiel der Kabelführung können diverse alternative Kabelführungen verwendet werden. Besonders beim Nachrüsten einer Gebäudewand mit einer erfindungsgemäßen Vorrichtung 1 ist es oftmals nicht oder nur unwirtschaftlich möglich, alle benötigten Verbindungselemente in das Innere der Vorrichtung 1 zu bringen. In diesem Fall ist es möglich, Kabel durch Bohrungen, beispielsweise in der Tür, in das Innere zu verlegen. Behelfsweise ist es auch möglich, vor dem Verbringen des TV-Gerätes auf die andere Seite der Wand alle Verbindungen zu trennen und die losen Kabel auf der anderen Seite der Wand erneut mit den jeweils dort befindlichen Steckern, beispielsweise zur Energieversorgung, zu verbinden.

Zur Aufrechterhaltung der Kabelspannung können neben dem gezeigten Beispiel ebenfalls andere Systeme Verwendung finden. Beispielsweise sind auch Seilzugsysteme, Kabelaufrollmechanismen, Führung im Inneren des Führungselementes oder andere Systeme möglich.

Um auch sehr große und schwere TV-Geräte einfach mittels einer erfindungsgemäßen Vorrichtung 1 durch eine Öffnung in einer Wand auf die andere Seite dieser Wand verbringen zu können, ist es möglich, die Vorrichtung 1 mit einem Motor und/oder Servoantrieb zu versehen. Dadurch ist eine Unterstützung der Bewegung oder auch eine vollautomatische Steuerung möglich. Dazu kann auch die Bewegung der Türen motorgesteuert ausgeführt werden. Um Beschädigungen von Gegenständen und/oder Mobiliar zu vermeiden, das sich im Bewegungspfad des TV-Gerätes befindet, ist es bei vollautomatischer Steuerung vorteilhaft, die Vorrichtung 1 zusätzlich mit Sensoren auszurüsten, die die ungehinderte Bewegung des TV-Gerätes zumindest zeitweise überprüfen und überwachen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: TV-Gerät
- 3: Öffnung, Wanddurchbruch
- 4: Wand
- 5: Gehäuse
- 6: Sichtverkleidung
- 7: Dämmstoff
- 8: Führungseinrichtung
- 9: schwenkbares Gelenk
- 10: Schmalseite
- 11: Tür
- 12: Teleskopschiene
- 13: Anschlusskabel
- 14: Steckdose
- 15: Lagerraum
- 16: Kabelführung
- 17: Bewegungspfad
- 18: federnder Stab
- 19: Rückstellfeder
- 20: Basis
- 21: Kugellager
- 22: Drehfuß
- 23: Befestigungsteil
- 24: Befestigungselement
- 25: Verschluss
- 26: unbeweglicher Teil der Teleskopschiene
- 27: beweglicher Teil der Teleskopschiene
- 28: Bohrung

## Patentansprüche

1. Vorrichtung (1) geeignet zum Verbringen eines TV-Gerätes (2) durch eine Öffnung (3) in einer Wohnraumwand (4) von einer Seite der Wohnraumwand (4) auf die andere Seite der Wohnraumwand (4),
**dadurch gekennzeichnet, dass**
die Vorrichtung (1) in der Öffnung (3) der Wohnraumwand (4) angeordnet ist und mindestens einen TV-Geräte-Träger umfasst, wobei der TV-Geräte-Träger auf einer Führungseinrichtung (8) angeordnet ist, welche einen mindestens teilweise in der Öffnung (3) angeordneten unbeweglich gegenüber der Wohnraumwand (4) ausgebildeten Teil (26) und mindestens einen gegenüber der Wohnraumwand (4) beweglichen Teil (27) aufweist und wobei mittels der Vorrichtung (1) das TV-Gerät (2) von einer Seite der Wohnraumwand (4) entlang eines vorgegebenen Bewegungspfades (17) durch die Öffnung (3) hindurch auf die andere Seite der Wohnraumwand (4) bewegbar ist, um das TV-Gerät (2) bedarfsweise auf durch die Wohnraumwand (4) voneinander getrennten Seiten der Wohnraumwand (4) zu benutzen.

2. Vorrichtung (1) nach Anspruch 1,
**dadurch gekennzeichnet, dass**
die Vorrichtung (1) ein zumindest teilweise in der Öffnung (3) der Wohnraumwand (4) angeordnetes Gehäuse (5) umfasst, in dem das TV-Gerät (2) und/oder der Träger und/oder die Führungseinrichtung (8) zumindest teilweise und/oder zeitweise angeordnet sind.

3. Vorrichtung (1) nach einem der vorangegangenen Ansprüche,
**dadurch gekennzeichnet, dass**
der Träger des TV-Gerätes (2) ein schwenkbares Gelenk (9) aufweist, welches mindestens eine Änderung eines zwischen einer Orthogonalen einer Bildschirmfläche des TV-Gerätes (2) und einer Bewegungsrichtung (17) entlang der Führungseinrichtung (8) gebildeten Winkels ermöglicht.

4. Vorrichtung (1) nach Anspruch 3,
**dadurch gekennzeichnet, dass**
das schwenkbare Gelenk (9) als Schwenkfuß ausgebildet ist.

5. Vorrichtung (1) nach einem der vorangegangenen Ansprüche,
**dadurch gekennzeichnet, dass**
die Führungseinrichtung (8) mindestens eine Teleskopschiene (12) umfasst.

6. Vorrichtung (1) nach einem der vorangegangenen Ansprüche,
**dadurch gekennzeichnet, dass**
die Vorrichtung in einer Öffnung (3) einer Wohnraumwand (4) eines mobilen Wohnraums angeordnet ist.

7. Vorrichtung (1) nach einem der vorangegangenen Ansprüche,
**dadurch gekennzeichnet, dass**
mindestens eine Seite der Öffnung (3) in der Wohnraumwand (4) verschließbar ist.

8. Vorrichtung (1) nach einem der vorangegangenen Ansprüche,
**dadurch gekennzeichnet, dass**
die Öffnung (3) mit mindestens einem Dämmstoff (7) ausgekleidet ist, der den Übertritt von Immissionen von einer Seite der Wohnraumwand (4) durch die Öffnung (3) hindurch auf die andere Seite der Wohnraumwand (4) erschwert.

9. Vorrichtung (1) nach einem der vorangegangenen Ansprüche,
**dadurch gekennzeichnet, dass**
das Gehäuse (5) mindestens auf einer Seite der Wohnraumwand (4) mit einer Sichtverkleidung (6) versehen ist.

10. Fahrzeug, welches eine Vorrichtung (1) nach Anspruch 1 umfasst.

11. Gebäude, welches eine Vorrichtung (1) nach Anspruch 1 umfasst.

## Claims

1. Device (1) suitable for passing a TV set (2) through an opening (3) in a living space wall (4) from one side of the living space wall (4) to the other side of the living space wall (4),
**characterised in that**
the device (1) is arranged in the opening (3) in the living space wall (4) and includes at least one TV set support, wherein the TV set support is arranged on a guide arrangement (8) which has a part (26) which is arranged at least partially in the opening (3) and is immovable with respect to the living space wall (4), and at least one part (27) which is movable with respect to the living space wall (4) and wherein by means of the device (1) the TV set (2) can be moved from one side of the living space wall (4) along a predetermined movement path (17) through the opening (3) to the other side of the living space wall (4) in order to use the TV set (2) as required on sides of the living space wall (4) which are separated from one another by the living space wall (4).

2. Device (1) as claimed in claim 1, **characterised in that** the device (1) includes a housing (5) arranged at least partially in the opening (3) of the living space wall (4), in which housing, the TV set (2) and/or the support and/or the guide arrangement (8) are arranged at least partially and/or from time to time.

3. Device (1) as claimed in any one of the preceding claims, **characterised in that** the support of the TV set (2) has a pivotable joint (9) which permits at least one change to an angle formed between an orthogonal of a screen surface of the TV set (2) and a movement direction (17) along the guide arrangement (8).

4. Device (1) as claimed in claim 3, **characterised in that** the pivotable joint (9) is designed as a pivoting foot.

5. Device (1) as claimed in any one of the preceding claims, **characterised in that** the guide arrangement (8) includes at least one telescopic rail (12).

6. Device (1) as claimed in any one of the preceding claims, **characterised in that** the device is arranged in an opening (3) in a living space wall (4) of a mobile living space.

7. Device (1) as claimed in any one of the preceding claims, characteiised in that at least one side of the opening (3) in the living space wall (4) can be closed.

8. Device (1) as claimed in any one of the preceding claims, **characterised in that** the opening (3) is lined with at least one insulating material (7) which makes it more difficult for emissions to pass from one side of the living space wall (4) through the opening (3) to the other side of the living space wall (4).

9. Device (1) as claimed in any one of the preceding claims, **characterised in that** the housing (5) is provided with a concealing means (6) at least on one side of the living space wall (4).

10. Vehicle which includes a device (1) as claimed in claim 1.

11. Building which includes a device (1) as claimed in claim 1.

## Revendications

1. Dispositif (1) adapté pour faire passer un appareil de télévision (2) à travers une ouverture (3) pratiquée dans une paroi de pièce d'habitation (4), depuis un côté de la paroide pièce d'habitation (4) jusque de l'autre côté de la paroi de pièce d'habitation (4),
**caractérisé en ce que**
le dispositif (1) est disposé dans l'ouverture (3) de la paroi de pièce d'habitation (4) et comprend au moins un support d'appareil de télévision, le support d'appareil de télévision étant disposé sur un moyen de guidage (8) qui présente une partie (26) disposée au moins partiellement dans l'ouverture (3) de manière immobile par rapport à la paroi de pièce d'habitation (4) et au moins une partie (27) mobile par rapport à la paroi de pièce d'habitation (4) et, au moyen du dispositif (1), l'appareil de télévision (2) étant déplaçable à travers l'ouverture (3) le long d'un chemin de déplacement prédéterminé (17) depuis un côté de la paroi de pièce d'habitation (4) jusque de l'autre côté de la paroi de pièce d'habitation (4) afin d'utiliser l'appareil de télévision (2) selon les besoins sur les côtés de la paroi de pièce d'habitation (4) séparés l'un de l'autre par la paroi de pièce d'habitation (4).

2. Dispositif (1) selon la revendication **1, caractérisé en ce que** le dispositif (1) comprend un boîtier (5) disposé au moins partiellement dans l'ouverture (3) de la paroi de pièce d'habitation (4), dans lequel l'appareil de télévision (2) et/ou le support et/ou le moyen de guidage (8) sont disposés au moins partiellement et/ou temporairement.

3. Dispositif (1) selon une des revendications précédentes, **caractérisé en ce que** le support de l'appareil de télévision (2) présente une articulation pivotante (9) qui permet au moins un changement d'angle formé entre une orthogonale de la surface d'un écran de l'appareil de télévision (2) et un sens de déplacement (17) le long du moyen de guidage (8).

4. Dispositif (1) selon la revendication 3, **caractérisé en ce que** l'articulation pivotante (9) est réalisée sous la forme d'un pied pivotant.

5. Dispositif (1) selon une des revendications précédentes, **caractérisé en ce que** le moyen de guidage (8) comprend au moins un rail télescopique (12).

6. Dispositif (1) selon une des revendications précédentes, **caractérisé en ce que** le dispositif est disposé dans une ouverture (3) d'une paroi de pièce d'habitation d'une pièce d'habitation mobile (4).

7. Dispositif (1) selon une des revendications précédentes, **caractérisé en ce qu**'au moins un côté de l'ouverture (3) dans la paroi de pièce d'habitation (4) peut être obturé.

8. Dispositif (1) selon une des revendications précédentes, **caractérisé en ce que** l'ouverture (3) est recouverte d'au moins un isolant (7) qui complique le passage de nuisances à travers l'ouverture (3) d'un côté de la paroi de pièce d'habitation (4) jusque de l'autre côté de la paroi de pièce d'habitation (4).

9. Dispositif (1) selon une des revendications précédentes, **caractérisé en ce que** le boîtier (5) est muni d'un revêtement visuel (6) au moins d'un côté de la paroi de pièce d'habitation (4).

10. Véhicule qui comprend un dispositif (1) selon la revendication 1.

11. Bâtiment qui comprend un dispositif (1) selon la revendication 1.
